# EUROPÄISCHE PATENTSCHRIFT

(11) **EP 3 569 903 B1**
(45) Veröffentlichungstag und Bekanntmachung des Hinweises auf die Patenterteilung: **09.08.2023**
(21) Anmeldenummer: 18172408.9
(22) Anmeldetag: 15.05.2018
(51) Int. Cl.: F16K 31/06

(54) **VORRICHTUNG ZUR DURCHFLUSSREGELUNG EINES FLUIDES**
DEVICE FOR REGULATING THE FLOW RATE OF A FLUID
DISPOSITIF DESTINÉ À LA RÉGULATION DU DÉBIT D'UN FLUIDE

(43) Veröffentlichungstag der Anmeldung: 20.11.2019
(73) Patentinhaber: Asco Numatics GmbH, 75248 Ölbronn-Dürrn (DE)
(72) Erfinder: Siedentopf, Klaus, 75245 Neulingen (DE); Ams, Felix, 75236 Kämpfelbach (DE)
(74) Vertreter: Witte, Weller & Partner Patentanwälte mbB

(56) Entgegenhaltungen:
- EP-A1- 1 785 654
- DE-A1-102007 013 447
- DE-B- 1 047 560
- JP-A- S5 253 527
- JP-A- H08 219 308
- US-A- 3 895 331
- US-A1- 2017 074 418

## Beschreibung

Die vorliegende Offenbarung betrifft eine als 3/2-Wegeventil gestaltete Vorrichtung zur Durchflussregelung eines Fluides, mit einem Ventilgehäuse mit zumindest zwei Ventilanschlüssen, wobei im Ventilgehäuse zumindest ein Fluidpfad ausgebildet ist, der sich zwischen den zumindest zwei Ventilanschlüssen erstreckt, zumindest einem Ventilsitz, der dem zumindest einen Fluidpfad zugeordnet ist, zumindest einem Schließkörper, der mit dem zumindest einen Ventilsitz koppelbar ist, um den zumindest einen Fluidpfad zu sperren oder freizugeben, und einer elektromagnetischen Betätigungseinheit zur Betätigung des Schließkörpers, die einen ersten Elektromagnet und einen zweiten Elektromagnet aufweist.

Eine solche Vorrichtung ist aus der EP 3 239 572 A1 bekannt. Die EP 3 239 572 A1 beschreibt Ventilanordnungen, die mit zwei Elektromagneten versehen sind, die (magnetisch) additiv auf einen Schließkörper am Ventilglied einwirken, um das Ventilglied zwischen zwei Stellungen hin und her zu schalten. Die Elektromagnete sind (mechanisch/strukturell) parallel zueinander angeordnet und wirken über einen Koppelmechanismus auf den Schließkörper ein.

Aus der US 3,895,331 A ist ein Ventil mit selbsthaltender Umschaltfunktion bekannt, das einen magnetischen Aktuator aufweist, der einen ersten Elektromagnet und einen zweiten Elektromagnet umfasst. Der erste Elektromagnet und der zweite Elektromagnet sind hintereinander und konzentrisch zu einem Anker angeordnet, der als Ventilstößel dient und an seiner Stirnseite ein Schließelement aus Gummi trägt. Ein federbelasteter, bistabiler Umschaltmechanismus wirkt mechanisch auf den Ventilstößel ein, um den Ventilstößel entweder in einer ersten o-der einer zweiten Stellung zu halten.

Aus der JP H08 219308 A ist ein zylinderförmiges Wegeventil bekannt, mit einem mit einer Mehrzahl seitlicher Öffnungen versehenen Gehäuse, in dem ein Ventilkörper axialbeweglich angeordnet ist. Das Gehäuse weist einen gestuften Innendurchmesser auf. Es gibt Bereiche mit größerem Innendurchmesser und Bereiche mit kleinerem Innendurchmesser. Den Bereichen mit größerem Innendurchmesser ist ein Abschnitt des Ventilkörpers mit größerem Außendurchmesser zugeordnet. Das Ventil weist einen Betätiger mit zwei Elektromagneten auf, die konzentrisch zum Ventilkörper und axial zueinander versetzt angeordnet sind.

Aus der US 2017/074418 A1 ist ein bidirektionales Magnetventil mit Permanenterregung und Federrückstellung bekannt. Das Ventil umfasst einen oberen Magnet und einen unteren Magnet, die symmetrisch angeordnet und über eine Ankerverbindungsstange miteinander verbunden sind. Der obere Magnet weist ein oberes Gehäuse auf. Der untere Magnet weist ein unteres Gehäuse auf. Die beiden Gehäuse sind über einen Verbindungsring miteinander gekoppelt. Jeder der Magneten umfasst einen Permanentmagneten sowie eine Spule, die einen beweglichen Anker umgeben. Die beiden Magneten sind hinsichtlich ihrer Spulen und Permanentmagneten spiegelsymmetrisch zueinander angeordnet.

Aus der JP S52 53527 A ist ein Wegeventil mit axialbeweglichem Anker bekannt, das ein Ventilgehäuse mit Anschlüssen aufweist, die durch Bewegungen des Ankers freigegeben oder gesperrt werden können. Dem Ventilgehäuse ist ein erster Elektromagnet mit einer ersten Spule und ein zweiter Elektromagnet mit einer zweiten Spule zugeordnet, die an voneinander abgewandten Enden des Ventilgehäuses angeordnet sind, wobei das Gehäuse den beiden Elektromagneten zwischengeordnet ist, und wobei sich der Anker durch die erste Spule, das Ventilgehäuse und die zweite Spule hindurch erstreckt.

Weitere allgemeine Bauform von Ventilen mit elektromagnetischer Betätigung sind beispielsweise aus der EP 2 365 239 A1 sowie aus der EP 2 068 056 A1 bekannt.

Die EP 2 068 056 A1 zeigt eine Ventilanordnung für flüssige oder gasförmige Medien, die ein Ventilglied in Form eines sogenannten Flappers aufweist. Das Ventilglied ist als elastisch aufgenommene, auslenkbare Klappe gestaltet. Das Ventilglied umfasst einen Schließkörper, der wahlweise einen von zwei Ventilsitzen verschließen und den jeweils anderen freigeben kann. Auf diese Weise lässt sich eine Durchflussregelung bewerkstelligen. Die zugehörige Ventilanordnung umfasst drei Ventilanschlüsse in einem Ventilgehäuse, die zwei Fluidpfade definieren, zwischen denen mittels dem Ventilglied und dem Schließkörper hin- und her geschaltet werden kann.

Zur Betätigung des Ventils ist ein Elektromagnet vorgesehen, der einen Zuganker umfasst, der auf ein gabelartig gestaltetes Betätigungselement einwirkt, das mit dem Schließkörper gekoppelt ist. Das gabelförmige Betätigungselement ist zwischen dem Zuganker des Elektromagneten und dem Schließkörper des Ventilgliedes angeordnet und stellt eine Kopplung zwischen beiden Komponenten bereit.

Der Elektromagnet ist als einfach wirkender Magnet gestaltet. Der Elektromagnet wirkt gegen die Kraft einer Schließfeder. Somit kann die Ventilanordnung in einem bestromten Zustand des Elektromagneten in einem ersten Zustand und in einem nicht bestromten Zustand des Elektromagneten in einem zweiten Zustand betrieben werden, denen entsprechende Stellungen des Ventilglieds zugeordnet sind.

Aus der EP 2 365 239 A1 ist eine Vorrichtung zur Durchflussregelung eines flüssigen oder gasförmigen Mediums bekannt, die eine Ventilanordnung umfasst, die ein Ventilgehäuse mit drei Ventilanschlüssen aufweist, wobei zwischen den drei Ventilanschlüssen zwei Fluidpfade definiert sind, die mittels einem auslenkbaren Ventilglied, das einen Schließkörper aufweist, selektiv aktivierbar oder blockierbar sind. Das Ventilglied umfasst einen Schließkörper, der etwa glockenartig gestaltet ist und verschwenkbar bzw. auslenkbar ist, um in einer ersten Stellung einen ersten Ventilanschluss und einer zweiten Stellung einen zweiten Ventilanschluss zu sperren. Das Ventilglied umfasst neben dem Schließkörper ferner einen Träger, an dem ein Betätigungsabschnitt ausgebildet ist. Der Betätigungsabschnitt kann etwa quer zu seiner Längserstreckung belastet und ausgelenkt werden, um den Schließkörper, ähnlich einer Glocke, zu verschwenken.

Zur Betätigung der Ventilanordnung gemäß der EP 2 356 239 A1 ist ein Elektromagnet vorgesehen, der einen Klappanker oder Schwenkanker aufweist. Am Klappanker sind Betätigungselemente in Form von Flachfedern oder Blattfedern ausgebildet, die auf einen Betätigungsabschnitt des Trägers des Ventilgliedes einwirken können. Der Klappanker kann zwischen zwei Stellungen hin- und her verschwenkt werden. Jede der Schaltstellungen des Klappankers entspricht einer entsprechenden Stellung des Schließkörpers.

In einem bestromten Zustand des Elektromagneten befindet sich die Ventilanordnung in einem ersten Zustand, bei dem etwa ein erster Fluidpfad aktiviert ist. In einem stromlosen Zustand des Magnetankers befindet sich die Ventilanordnung in einem zweiten Zustand, in dem etwa ein zweiter Fluidpfad aktiviert ist. Der jeweils andere Fluidpfad ist vorzugsweise gesperrt. Zur Rückstellung des Klappankers bzw. des Schließkörpers sind dem Klappanker Permanentmagneten zugeordnet, die ähnlich einer Feder eine Rückstellkraft bewirken.

Die in der EP 2 365 239 A1 sowie der EP 2 068 056 A1 gezeigten Vorrichtungen umfassen jeweils einen einzigen Elektromagneten, mit dem das jeweilige Ventilglied bzw. dessen Schließkörper betätigt werden kann. Insbesondere in Kombination mit einem Rückstellelement in Form einer Feder oder eines Permanentmagneten kann auch bei einem einfach wirkenden Elektromagneten die Ventilanordnung sicher in zumindest zwei Schaltstellungen betrieben werden.

Ferner zeigen die EP 2 068 056 A1 sowie die EP 2 365 239 A1 Ventilanordnungen, die eine hermetische Trennung zwischen einer Ventilkammer, in die die Ventilanschlüsse münden und der Betätigungseinheit ermöglichen. Derartigen Ventilanordnungen können auch als mediengetrennte Ventilanordnungen bezeichnet werden. Die hermetische Trennung zwischen der Ventilkammer und der Betätigungseinheit vereinfacht die Nutzung der Ventilanordnungen im medizinischen und/oder analytischen Umfeld.

Ein generelles Entwicklungsziel für Magnetventile ist die Bauraumminimierung bei zumindest gleich bleibender Leistung und Funktionsvielfalt. Ein weiteres allgemeines Entwicklungsziel ist die Fähigkeit, höhere Drücke und/oder größere Durchflussmengen verarbeiten bzw. regeln zu können.

Vor diesem Hintergrund liegt der Offenbarung die Aufgabe zugrunde, eine Vorrichtung zur Durchflussregelung eines Fluides für eine Ventilanordnung anzugeben, die eine erhöhte Leistungsdichte erlaubt und auch bei begrenztem Bauraum gleichwohl eine hohe Leistungsfähigkeit aufweist. Ferner sollen sich nach Möglichkeit weitere Optionen für die Ansteuerung der Vorrichtung ergeben. Dies soll beispielhaft einen Modus mit geringer Energieaufnahme sowie einen Modus mit hoher Leistungsfähigkeit umfassen. Darüber hinaus soll die Funktionssicherheit erhöht werden. Nach Möglichkeit soll eine Ventilanordnung, die mit einer derartigen Vorrichtung zur Durchflussregelung versehen ist, entweder bei einem gegebenen Bauraum einen erweiterten Einsatzbereich abdecken, insbesondere im Hinblick auf zu regelnde Drücke und/oder Durchflussmengen. Alternativ soll bei gegebenen Anforderungen an Durchflussmengen und/oder zu regelnde Drücke der Bauraum möglichst reduziert werden

Diese Aufgabe wird durch eine als 3/2-Wegeventil gestaltete Vorrichtung zur Durchflussregelung eines Fluides gelöst, mit einem Ventilgehäuse mit drei Ventilanschlüssen, wobei im Ventilgehäuse ein erster und ein zweiter Fluidpfad ausgebildet sind, die sich zwischen den drei Ventilanschlüssen erstrecken, einem ersten Ventilsitz, der dem ersten Fluidpfad zugeordnet ist, einem zweiten Ventilsitz, der dem zweiten Fluidpfad zugeordnet ist, einem Schließkörper, der mit dem ersten und zweiten Ventilsitz koppelbar ist, um die zwei Fluidpfade zu sperren oder freizugeben, und einer elektromagnetischen Betätigungseinheit zur Betätigung des Schließkörpers, die einen ersten Elektromagnet und einen zweiten Elektromagnet aufweist, wobei der erste Elektromagnet und der zweite Elektromagnet in einer Längsrichtung hintereinander angeordnet sind, wobei der erste Elektromagnet einen ersten beweglichen Anker und der zweite Elektromagnet einen zweiten beweglichen Anker aufweist, die zur Erzeugung eines Ankerhubs in der Längsrichtung beweglich sind, wobei der erste Anker und der zweite Anker zur Bewegungsmitnahme mechanisch gekoppelt sind, wobei der erste Anker und der zweite Anker zur Bewegungsmitnahme in der Längsrichtung über ein Verbindungsstück miteinander gekoppelt sind, das als Stift gestaltet und zwischen dem ersten Anker und dem zweiten Anker angeordnet ist, wobei das Verbindungsstück aus einem nichtmagnetischen Werkstoff besteht, so dass eine magnetische Entkopplung zwischen dem ersten Elektromagneten und dem zweiten Elektromagneten gegeben ist, wobei der erste Elektromagnet und der zweite Elektromagnet ein gemeinsames Magnetjoch aufweisen, wobei sich der erste Ventilsitz und der zweite Ventilsitz einander gegenüberliegen, und wobei der Schließkörper in einer ersten Schaltstellung am ersten Ventilsitz zur Anlage kommt, um den ersten Ventilsitz zu sperren, und in seiner zweiten Stellung am zweiten Ventilsitz zur Anlage kommt, um den zweiten Ventilsitz zu sperren.

Die Aufgabe der Erfindung wird auf diese Weise vollkommen gelöst.

Gemäß diesem Aspekt erlaubt die Anordnung der beiden Elektromagneten hintereinander eine kompaktere Bauform der Ventileinheit und eine verbesserte Leistungsfähigkeit. Bei gegebenem Bauraum kann sich eine Krafterhöhung und/oder eine verbesserte Dynamik ergeben. Es kann eine deutlich höhere Magnetkraft bereitgestellt werden, um den Schließkörper zu betätigen. Dies erlaubt einerseits das Schalten wesentlich höherer Drücke. Ferner können etwa Querschnitte der Fluidpfade im Ventilgehäuse größer gestaltet werden. Darüber hinaus kann aufgrund der erhöhten Magnetkraft ein besseres Dynamikverhalten und ein schnelleres Ansprechen der Vorrichtung bewirkt werden Die Vorrichtung ist sowohl bei 2/2 Wegeventilen als auch bei 3/2 Wegeventilen umsetzbar.

Die beiden Elektromagneten ergänzen sich in ihrer Wirkung. Die beiden Elektromagneten haben zumindest in beispielhaften Ausführungsformen die gleiche Wirkrichtung. Die mechanische Verbindung koppelt die Bewegung der beiden Elektromagneten zwangsläufig miteinander. Auf diese Weise kann ein und dieselbe Betätigungsbewegung/Schaltbewegung auf den Schließkörper aufgebracht werden.

Der Schließkörper ist in zumindest einigen Ausführungsformen Bestandteil eines Ventilglieds. Es ist jedoch auch vorstellbar, dass der Schließkörper zumindest im Wesentlichen das Ventilglied ausbildet. Der Schließkörper kann etwa als Klappe, Membran oder als Hebel ausgeführt sein. In zumindest einigen beispielhaften Ausführungsformen besteht der Schließkörper aus einem Elastomer.

Die Gestaltung der Vorrichtung mit einer Betätigungseinheit, die zwei Elektromagneten aufweist, die additiv auf den Schließkörper einwirken, eignet sich insbesondere für Ventilanordnungen, die zwei Fluidpfade aufweisen, die etwa durch drei Ventilanschlüsse definiert sind. Beispielhaft können die drei Ventilanschlüsse zwei Eingänge sowie einen Ausgang umfassen, oder umgekehrt. Jeweils zwischen einem der beiden Eingänge und dem Ausgang (oder umgekehrt zwischen einem der beiden Ausgänge und dem Eingang) erstreckt sich ein Fluidpfad.

Jedem Fluidpfad ist ein Ventilsitz zugeordnet, an dem der Schließkörper zu Anlage gelangen kann. Demgemäß kann der Schließkörper in einer ersten der beiden Stellungen einen ersten Ventilsitz und in einer zweiten der beiden Stellungen einen zweiten Ventilsitz abdichten. Demgemäß kann selektiv der erste Fluidpfad oder der zweite Fluidpfad blockiert oder freigegeben werden.

Bei gegebener Spannung erlaubt die Berücksichtigung eines zweiten Elektromagneten idealerweise eine Verdopplung der erzielbaren Magnetkräfte. Es kann sich insgesamt, bei gegebenen Leistungsdaten, eine kompaktere Bauform der Ventilanordnung ergeben. Umgekehrt können sich, bei gegebener Baugröße, verbesserte Leistungsdaten ergeben.

Die Vorrichtung eignet sich insbesondere zur Ansteuerung und/oder Regelung von Mikroventilen, die in der medizinischen Diagnostik und Therapie sowie in der medizinischen und industriellen Analysentechnik zum Einsatz kommen. Beispielsweise kann die Ventilanordnung auch als mediengetrennte Ventilanordnung ausgeführt werden, wobei das Ventilglied mit dem Schließkörper eine hermetische Abdichtung zwischen den Elektromagneten einerseits sowie den Fluidpfaden andererseits bewirkt.

Gemäß der vorliegenden Offenbarung erfolgt die Ansteuerung des Ventils über zwei Elektromagneten mit zwei Ventilspulen. Die beiden Elektromagneten haben zumindest in beispielhaften Ausführungsformen die gleiche Wirkrichtung. Die beiden Elektromagneten sind in beispielhaften Ausführungsformen hintereinandergeschaltet und über ein Verbindungselement miteinander zur Bewegungsmitnahme gekoppelt. Diese Kopplung kann grundsätzlich auch als Zwangskopplung bezeichnet werden. Mit anderen Worten ist es vorstellbar, dass Anker der beiden Elektromagneten derart miteinander Zwangsgekoppelt sind, dass die beiden Elektromagneten jeweils die gleiche Hubstellung aufweisen.

Wenn die Spulen beider Elektromagneten bestromt werden, so werden deren Anker angezogen, und das Ventilglied wird aus der Ruhestellung heraus bewegt. Wenn die Spulen beider Elektromagneten stromlos geschaltet werden, so fallen die Magnetanker und folglich auch das Ventilglied in die Ruhestellung zurück.

Durch das Hintereinanderschalten der beiden Elektromagnete können die erreichbaren Betätigungskräfte im Vergleich zu einer einzelnen Einfachspule erhöht werden. Dies geht beispielsweise darauf zurück, dass bei zwei Elektromagneten zwei Luftspalte gegeben sind. Demgemäß ist annähernd die doppelte Magnetfläche wirksam.

Im Gegensatz zu einem einzelnen Elektromagneten mit einer einzelnen Spule wird der magnetische Fluss durch die beiden Elektromagnete entsprechend aufgeteilt. Auf diese Weise können Sättigungseffekte im Material vermieden werden, insbesondere in weichmagnetischem Material.

Vorzugsweise ergeben sich die Vorteile im Vergleich zu einem einzelnen Elektromagneten durch die Verwendung zweier Elektromagneten, die jedoch zusammen keinen größeren Bauraum beanspruchen.

Gemäß einer beispielhaften Ausgestaltung der Vorrichtung sind der erste Elektromagnet und der zweite Elektromagnet konzentrisch zueinander ausgerichtet. Dies gilt insbesondere für deren Anker, die vorzugsweise eine gemeinsame Längsachse aufweisen.

Gemäß einer weiteren beispielhaften Ausgestaltung der Vorrichtung sind der erste Elektromagnet und der zweite Elektromagnet in zumindest einem Betriebsmodus derart bestrombar, dass sich die Magnetkräfte des ersten Ankers und des zweiten Ankers addieren. Mit anderen Worten weisen die beiden Elektromagneten in diesem Betriebsmodus die gleiche mechanische Wirkrichtung auf. Die beiden Spulen der beiden Elektromagneten können entsprechend gleichsinnig bestromt werden.

Gemäß einer weiteren beispielhaften Ausgestaltung der Vorrichtung ist der erste Anker mit einem Betätiger für den zumindest einen Schließkörper gekoppelt. Demgemäß ist der erste Anker derjenige Anker, der dem Schließkörper bzw. dem Ventilglied näher ist als der zweite Anker. Mit anderen Worten ist der erste Anker zwischen dem Schließkörper und dem zweiten Anker angeordnet.

Der erste Anker und der zweite Anker sind zur Bewegungsmitnahme in der Längsrichtung über ein Verbindungsstück miteinander gekoppelt. Das Verbindungsstück kann lose zwischen dem ersten Anker und dem zweiten Anker angeordnet sein. Auf diese Weise lassen sich Druckkräfte zwischen dem ersten Anker und dem zweiten Anker übertragen, aber keine Zugkräfte.

Es ist zumindest in beispielhaften Ausführungsformen jedoch auch vorstellbar, den ersten und den zweiten Anker über das Verbindungsstück derart miteinander zu koppeln, dass sowohl Bewegungen in Richtung auf den zweiten Anker als auch Bewegungen in Richtung auf den ersten Anker übertragen werden. Auf diese Weise können Druckbewegungen und Zugbewegungen übertragen werden. Eine solche Ankopplung des Verbindungsstücks kann beispielsweise formschlüssig erfolgen.

Das Verbindungsstück besteht aus einem nichtmagnetischen Werkstoff. Ein nichtmagnetischer Werkstoff kann auch als amagnetischer Werkstoff bezeichnet werden. Dies heißt, dass zumindest der Grad des Magnetismus bei demjenigen Werkstoff, aus dem das Verbindungsstück besteht, deutlich niedriger als bei den übrigen Bauteilen, insbesondere den Ankern, der beiden Elektromagneten ist. Die Anker lassen sich wesentlich einfacher und stärker magnetisieren.

Auf diese Weise kann eine magnetische Entkopplung zwischen dem ersten Elektromagneten und dem zweiten Elektromagneten bewirkt werden. Andernfalls könnten sich parasitäre Effekte einstellen.

Gemäß einer weiteren beispielhaften Ausgestaltung der Vorrichtung haben der erste Elektromagnet und der zweite Elektromagnet konstruktiv den gleichen Luftspalt, wobei der Ankerhub des ersten Ankers und des zweiten Ankers zwangsgekoppelt ist.

In Sinne der vorliegenden Offenbarung bezieht sich die Bezeichnung "zwangsgekoppelt" auf eine mechanische Kopplung zwischen dem ersten Anker und dem zweiten Anker, die bewirkt, dass die jeweiligen Hubstellungen identisch sind. Mit anderen Worten würde etwa der zweite Anker auch dann gemeinsam mit dem ersten Anker bewegt werden, wenn nur die Spule des ersten Elektromagneten entsprechend bestromt wird und der zweite Elektromagnet inaktiv ist.

Es versteht sich, dass die Bezeichnung "gleicher Luftspalt" nicht einschränkend auszulegen ist. Mit anderen Worten können auch bei konstruktiv gleichem Luftspalt minimale toleranzbedingte Abweichungen gegeben sein.

Gemäß einer weiteren beispielhaften Ausgestaltung der Vorrichtung bestehen Ankerteile des ersten Elektromagneten und des zweiten Elektromagneten zumindest im Wesentlichen aus weichmagnetischem Material. Hierbei ist es von Vorteil, die Flussführung auf einen ersten Elektromagneten und ein zweiten Elektromagneten aufzuteilen. Auf diese Weise kann eine vorschnelle Sättigung des weichmagnetischen Materials vermieden werden.

Es gibt bewegliche Ankerteile, also die in der Längsrichtung verfahrbaren Anker, die mit dem Schließkörper gekoppelt sind. Ferner gibt es auch feststehende Ankerteile, gegen die die jeweiligen beweglichen Ankerteile verfahren werden. Zwischen dem beweglichen Ankerteil und dem feststehenden Ankerteil ist der Luftspalt des Elektromagneten definiert.

Als weichmagnetische Werkstoffe können allgemein ferromagnetische Materialien bezeichnet werden, die sich in einem Magnetfeld leicht magnetisieren lassen. Demgegenüber bestehen beispielsweise Dauermagneten aus sogenannten hartmagnetischen Werkstoffen.

Der erste Elektromagnet und der zweite Elektromagnet weisen ein gemeinsames Magnetjoch auf. Auf diese Weise lässt sich die Fertigung vereinfachen. Ferner kann insgesamt der Bauraumbedarf begrenzt oder minimiert werden.

Gemäß einer weiteren beispielhaften Ausgestaltung der Vorrichtung ist zumindest ein Permanentmagnet dem ersten Elektromagnet und/oder dem zweiten Elektromagnet zugeordnet, um ein bistabiles Verhalten zu erzeugen. Dies kann Ausgestaltungen umfassen, bei denen in den jeweiligen Endlagen der Elektromagneten keine (elektrische) Energie erforderlich ist, um die beiden Anker (oder einen der beiden Anker) in Position zu halten. Dies wird durch den zumindest einen Permanentmagneten bewirkt.

Gemäß einer weiteren beispielhaften Ausgestaltung der Vorrichtung ist ein gemeinsames Gehäuse für den ersten Elektromagnet und den zweiten Elektromagnet vorgesehen ist. Insbesondere sind zumindest in beispielhaften Ausführungsformen die beiden Spulen des ersten Elektromagneten und des zweiten Elektromagneten in einem gemeinsamen Gehäuse untergebracht. Diese Ausführungsform ist vorteilhaft mit der Verwendung eines gemeinsamen Magnetjochs für beide Elektromagneten kombinierbar. Auch diese Maßnahme trägt zu einer äußerst kompakten Bauform bei.

Gemäß einer weiteren beispielhaften Ausgestaltung der Vorrichtung ist in zumindest einem Betriebsmodus entweder der erste Elektromagnet oder der zweite Elektromagnet bestrombar. Dies würde bedeuten, dass der jeweils andere Elektromagnet passiv ist, also nicht bestromt wird. Auch dann, wenn nur einer der beiden Elektromagneten bestromt wird, kann das Ventil geschaltet werden.

Gemäß einer weiteren beispielhaften Ausgestaltung der Vorrichtung sind der erste Elektromagnet und der zweite Elektromagnet gemeinsam parallel sowie seriell bestrombar, um zumindest eine erste Betriebsart und eine zweite Betriebsart bereitzustellen.

Mit anderen Worten gibt es in einem Betriebsmodus, in dem beide Elektromagneten bestromt werden, zwei Betriebsarten, die einmal eine parallele Schaltung und einmal eine serielle Schaltung der Spulen der beiden Elektromagneten umfassen.

Auf diese Weise kann bedarfsweise das Anzugsverhalten verbessert werden, wenn höhere Kräfte erzeugt werden. Ferner lässt sich der Energieverbrauch optimieren.

Die parallele bzw. serielle Bestromung bezieht sich auf eine elektrische Ansteuerung und nicht auf eine mechanische Gestaltung.

Es ist vorstellbar, während eines Lastwechsels/eines Taktes die beiden Magneten zunächst gemäß der ersten Betriebsart und danach gemäß der zweiten Betriebsart anzusteuern.

Gemäß einer weiteren beispielhaften Ausgestaltung der Vorrichtung erfolgt bei einer Betätigung des Schließkörpers zunächst in der ersten Betriebsart eine parallele Bestromung, wobei nach einer definierten Zeit in der zweiten Betriebsart eine serielle Bestromung erfolgt.

Unter einer Betätigung ist beispielsweise ein Umschalten des Ventils zwischen den beiden Schaltstellungen zu verstehen. Mit anderen Worten umfasst eine Betätigung beispielsweise ein Anziehen des Schließkörpers über die Anker und ein Halten in der angezogenen Stellung.

Zur Verbesserung des Anzugsverhaltens kann zunächst eine elektrisch parallele Ansteuerung genutzt werden, die in der doppelten Spulenleistung und folglich in der doppelten Magnetkraft resultiert. Wenn die Anker angezogen sind, kann in eine elektrisch serielle Ansteuerung umgeschaltet werden, die in der halbe Spulenleistung und folglich in der halbe Magnetkraft resultiert.

Auf diese Weise kann die Leistung in einem solchen Haltemodus etwa auf 1/4 der Leistung im Anzugsmodus reduziert werden. Dies wirkt sich günstig auf den Energieverbrauch und die Wärmeentwicklung aus.

Beispielhaft kann die Vorrichtung für einen kurzen Zeitraum (etwa für 100 ms [Millisekunden]) mit 100 % Leistung, also mit der Anzugsleistung, betrieben werden. Nach diesem Zeitraum wird auf 25 % der Leistung umgeschaltet, um im Haltemodus die Wärmeerzeugung und den Energieverbrauch zu reduzieren.

Die Aufgabe der Erfindung wird ferner durch eine Ventilanordnung gelöst, die eine Vorrichtung zur Durchflussregelung gemäß zumindest einer der hierin beschriebenen Ausführungsformen umfasst. Beispielhaft ist eine solche Ventilanordnung als Sitzventilanordnung, Flapper-Ventilanordnung, Membran-Ventilanordnung oder als Trennhebel-Ventilanordnung ausgeführt. Kombinationen daraus sind denkbar.

Es versteht sich, dass die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der vorliegenden Erfindung zu verlassen.

Weitere Merkmale und Vorteile der Erfindung ergeben sich aus der nachfolgenden Beschreibung mehrerer bevorzugter Ausführungsbeispiele unter Bezugnahme auf die Zeichnungen. Es zeigen:
- Fig. 1: eine perspektivische Ansicht einer Ventilanordnung, die mit einer Vorrichtung zur Durchflussregelung versehen ist;
- Fig. 2: eine Seitenansicht der Anordnung gemäß Fig. 1 im Bereich der Anschlüsse;
- Fig. 3: eine Schnittansicht der in den Figuren 1 und 2 veranschaulichten Ventilanordnung entlang der Linie III-III in Fig. 2;
- Fig. 4: eine geschnittene Teilansicht der in Fig. 3 veranschaulichten Ventilanordnung entlang der Linie IV-IV in Fig. 3;
- Fig. 5: eine explodierte perspektivische Ansicht der in den Figuren 1 bis 4 veranschaulichten Ventilanordnung, die mit einer offenbarungsgemäßen Vorrichtung zur Durchflussregelung versehen ist; und
- Fig. 6: eine geschnittene Teilansicht einer abgewandelten Ausführungsform einer Ventilanordnung, die auf der Anordnung gemäß Fig. 3 beruht, im Bereich eines Betätigungsabschnitts.

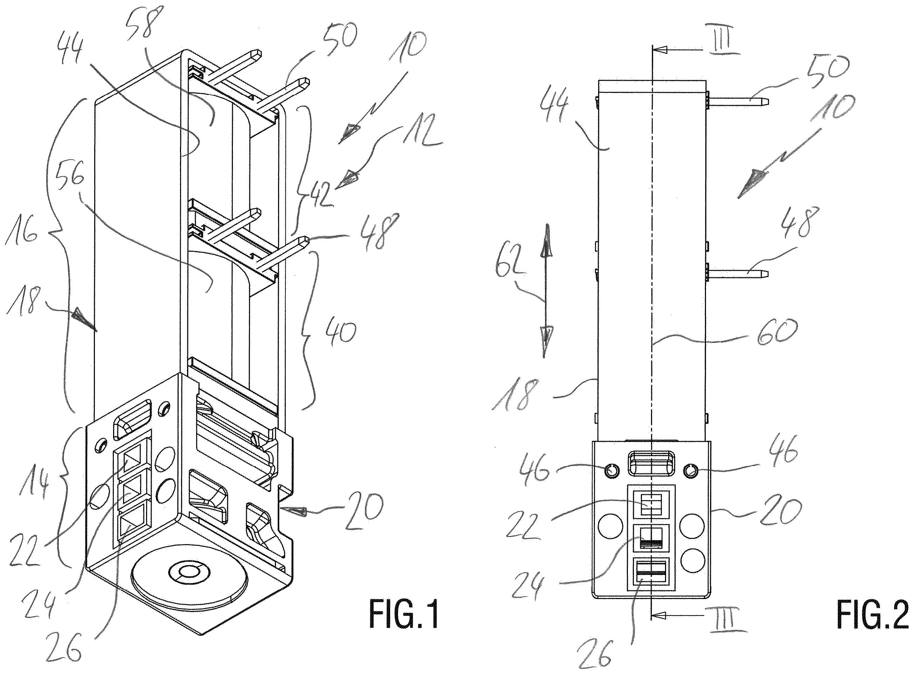

Fig. 1 veranschaulicht anhand einer perspektivischen Darstellung eine beispielhafte Ausführungsform einer insgesamt mit 10 bezeichneten Ventilanordnung. Das Ausführungsbeispiel der Ventilanordnung 10 wird ergänzend in den Figuren 2 bis 5 veranschaulicht. Es versteht sich, dass die Ventilanordnung 10 auch anderweitig gestaltet sein kann. Insofern sind konstruktive Details, die im Folgenden zu Veranschaulichungszwecken erläutert werden, nicht einschränkend zu verstehen.

Die Ventilanordnung 10 umfasst eine Vorrichtung zur Durchflussregelung, die mit 12 bezeichnet ist. Die Vorrichtung 12 weist einen Ventilabschnitt 14 und einen Betätigungsabschnitt 16 auf. Der Betätigungsabschnitt 16 umfasst ein Gehäuse 18 für den Betätigungsabschnitt, welches auch als Betätigungsgehäuse bzw. Aktuatorgehäuse bezeichnet werden kann.

In der Darstellung in Fig. 1 sind am Gehäuse 20 Anschlüsse 22, 24, 26 ausgebildet, die dem Ventilabschnitt 14 der Vorrichtung 10 zugeordnet sind. Mit anderen Worten handelt es sich bei der Ventilanordnung 10 beispielhaft um ein Ventil mit drei Anschlüssen 22, 24, 26. Es ist jedoch auch vorstellbar, die Ventilanordnung 10 als Ventilanordnung mit zwei Anschlüssen auszuführen. Die Anschlüsse 22, 24, 26 sind in der in Fig. 2 veranschaulichten Ansicht frontal dargestellt.

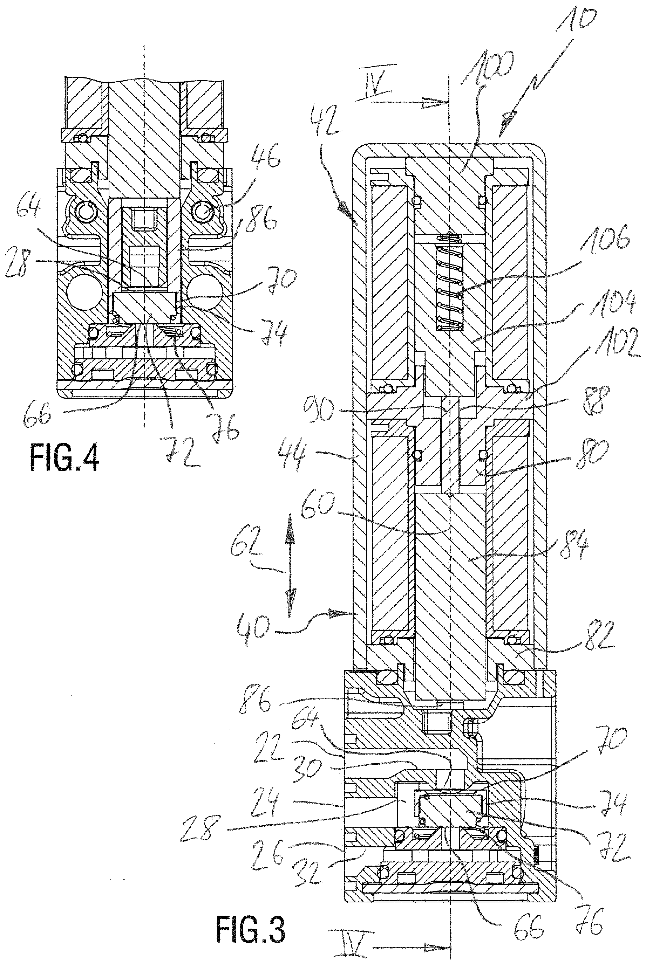

Mit ergänzender Bezugnahme auf Fig. 3 und Fig. 4, die um 90° zueinander verschwenkte Längsschnitte durch die Vorrichtung 10 zeigen, wird die Gestaltung der Ventilanordnung 10 bzw. der Vorrichtung 12 näher veranschaulicht. Die Orientierung der Darstellung in Fig. 3 folgt der Linie III-III in Fig. 2. Die Orientierung der Teilansicht in Fig. 4 folgt der Linie IV-IV in Fig. 3.

Die Anschlüsse 22, 24, 26 münden in eine Ventilkammer 28. Ein erster Pfad 30 ist zwischen den Anschlüssen 22 und 24 ausgebildet. Ein zweiter Pfad 32 ist zwischen den Anschlüssen 24 und 26 ausgebildet. Beispielhaft ist die Ventilanordnung 10 als 3/2 Wegeventil gestaltet, also als Ventil mit drei Anschlüssen und zwei Schaltstellungen. Demgemäß kann eine erste Schaltstellung eine Freigabe des ersten Pfades 30 und ein Sperren des zweiten Pfades 32 umfassen. Entsprechend kann eine zweite Schaltstellung eine Freigabe des zweiten Pfades 32 und ein Sperren des ersten Pfades 30 umfassen. Das Umschalten zwischen den beiden Schaltstellungen erfolgt unter Nutzung des Betätigungsabschnitts 16.

Es versteht sich, dass die Ventilanordnung 10 in alternativen Ausführungsform auch anderweitig gestaltet sein kann, etwa als Ventil mit lediglich zwei Anschlüssen, die einen Pfad ausbilden, und zwei Schaltstellungen, die eine Freigabe und ein Sperren des einen Pfades umfassen.

Im Betätigungsabschnitt 16 sind zwei Elektromagneten 40, 42 angeordnet. Die beiden Elektromagneten 40, 42 sind in Bezug auf ihre jeweilige Längserstreckung hintereinander angeordnet. Der erste Elektromagnet 40 ist zwischen dem zweiten Elektromagneten und dem Ventilabschnitt 14 angeordnet. Beide Elektromagneten 40, 42 wirken additiv auf den Ventilabschnitt 14 ein, um die Ventilanordnung 10 bzw. einen Durchfluss durch die Ventilanordnung 10 zu steuern/regeln.

In dem anhand der Figuren 1 bis 5 veranschaulichten Ausführungsbeispiel ist den beiden Elektromagneten 40, 42 ein gemeinsames Joch 44 zugeordnet. Beide Elektromagneten 40, 42 teilen sich ein und dasselbe Magnetjoch 44. Dies vereinfacht den Aufbau und ermöglicht eine kompakte Bauform.

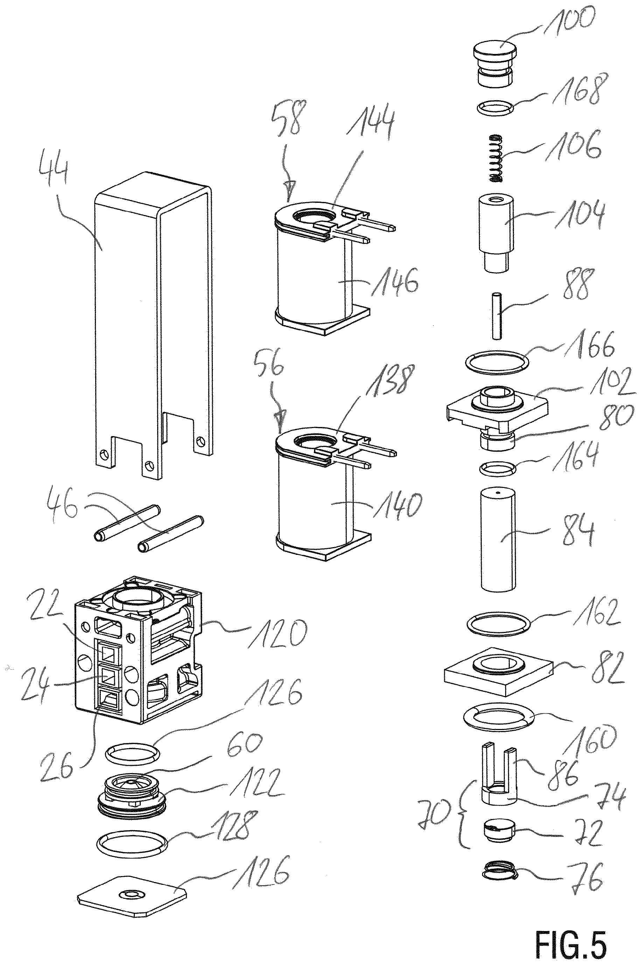

Mit Bezugnahme auf Fig. 1 sowie mit ergänzendem Bezug auf Fig. 4 und die perspektivische Explosionsdarstellung in Fig. 5 werden Verbindungselemente 46 veranschaulicht, die zur Verbindung des Ventilglieds 14 mit dem Betätigungsabschnitt 16 vorgesehen sind. Bei den Verbindungselementen 46 handelt es sich beispielsweise um Verbindungsstifte/Spannstifte. Die Verbindungselemente 46 werden genutzt, um den Betätigungsabschnitt 16 mit dem Ventilabschnitt 14 zu verblocken. Zu diesem Zweck sind am Ventilgehäuse 20 sowie am Joch 44 in entsprechende Ausnehmungen vorgesehen, in die die Verbindungselemente 46 gesteckt/gepresst werden können, um den Betätigungsabschnitt 16 mit dem Ventilabschnitt 14 fest miteinander zu verbinden.

Das Joch 44 umspannt und begrenzt den ersten Elektromagneten 40 und den zweiten Elektromagneten 42. Beim ersten Elektromagneten 40 sind Anschlüsse 48 zur Bestromung vorgesehen. Beim zweiten Elektromagneten 42 sind Anschlüsse 50 zur Bestromung vorgesehen, vergleiche auch Fig. 1 und Fig. 2. Auf diese Weise lassen sich verschiedene Betriebsarten verwirklichen, etwa umfassend eine serielle Bestromung oder eine parallele Bestromung der beiden Elektromagneten 40, 42.

Der erste Elektromagnet 40 umfasst eine Spule 56. Der zweite Elektromagnet 42 umfasst eine Spule 58. Die beiden Elektromagneten 40, 42 sind in dem anhand der Figuren 1 bis 5 veranschaulichten Ausführungsbeispiel gleichartig gestaltet. Dies trifft zumindest auf die Spulen 56, 58 zu. Gleichwohl ist dies nicht einschränkend zu verstehen. Es ist nicht ausgeschlossen, dass die Spulen 56, 58 bzw. die Elektromagneten 40, 42 im Gesamten in anderen Ausführungsformen unterschiedlich gestaltet sind.

In Fig. 2 sowie in Fig. 3 ist durch eine strichpunktierte Linie eine Längsachse 60 angedeutet. In dem veranschaulichten Ausführungsbeispiel sind die beiden Elektromagnete 40, 42 konzentrisch zur Längsachse 60 ausgerichtet. Eine Hubbewegung der Elektromagneten 40, 42 erfolgt in einer Längsrichtung 62 entlang der Längsachse 60, vergleiche den jeweiligen Doppelpfeil in Fig. 2 und Fig. 3.

Zumindest in dem anhand der Figuren 1 bis 5 veranschaulichten Ausführungsbeispiel fällt die Längsachse 60 auch mit einer Längsachse des Ventilabschnitts 14 zusammen. Mit anderen Worten sind in diesem Ausführungsbeispiel der erste Elektromagnet 40, der zweite Elektromagnet 42 und der Ventilabschnitt 14 konzentrisch zueinander ausgerichtet. Es versteht sich jedoch, dass Ausführungsformen denkbar sind, bei denen der Ventilabschnitt 14 nicht oder nicht genau konzentrisch mit den beiden Elektromagneten 40, 42 ausgerichtet ist.

Die in Fig. 3 und Fig. 4 dargestellten Schnitte durch das Ventilgehäuse 20 veranschaulichen die Detailgestaltung des Ventilabschnitts 14. Der Ventilabschnitt 14 umfasst einen ersten Ventilsitz 64 und einen zweiten Ventilsitz 66. Der erste Ventilsitz 64 ist dem ersten Pfad 30 zugeordnet. Der zweite Ventilsitz 66 ist dem zweiten Pfad 32 zugeordnet.

Die Steuerung der Ventilanordnung 10 erfolgt über einen Schließkörper 72, der an einem Ventilglied 70 angeordnet und/oder ausgebildet ist. Beispielhaft besteht der Schließkörper 72 aus einem Elastomer, zumindest im Wesentlichen. Auf diese Weise kann der Schließkörper 72 dichtend an dem ersten Ventilsitz 64 oder dem zweiten Ventilsitz 66 zur Anlage kommen.

In dem Ausführungsbeispiel, das anhand der Figuren 1 bis 5 veranschaulicht wird, ist der Schließkörper 72 zumindest teilweise von einem Ring 74 umgeben bzw. an diesem aufgenommen. Der Ring 74 ist beispielhaft als Bestandteil des Ventilglieds 70 ausgestaltet. Dem Schließkörper 72 ist ferner ein Vorspannelement 76 zugeordnet, das auch als Feder, insbesondere als Druckfeder bezeichnet werden kann.

Der Betätigungsabschnitt 16 mit den beiden Elektromagneten 40, 42 ist dazu ausgestaltet, auf das Ventilglied 70 mit dem Schließkörper 72 einzuwirken, um den Schließkörper 72 zwischen dem ersten Ventilsitz 64 und dem zweiten Ventilsitz 66 hin und her zu bewegen. Auf diese Weise kann die Ventilanordnung 10 zwischen zwei Schaltstellungen umgeschaltet werden.

Mit Bezugnahme auf Fig. 3 sowie auf die perspektivische Explosionsdarstellung in Fig. 5 wird die Gestaltung des Betätigungsabschnitts 16 mit den beiden Elektromagneten 40, 42 näher veranschaulicht.

Der erste Elektromagnet 40 weist an seinem Ende, das dem zweiten Elektromagnet 42 zugewandt ist, eine Hülse 80 auf. Die Hülse 80 kann auch als feststehendes Ankerteil bezeichnet werden. Die Hülse 80 ist mit einer Ausnehmung in Form einer Durchgangsbohrung versehen. An seinem gegenüberliegenden Ende weist der erste Elektromagnet 40 eine Flussscheibe 82 auf, die dem Ventilabschnitt 14 zugewandt ist. Zwischen der Flussscheibe 82 und der Hülse 80 ist die Spule 56 angeordnet.

Ferner weist der erste Elektromagnet einen (beweglichen) Anker 84 auf, der über einen Betätiger 86 mit dem Schließkörper 82 gekoppelt ist, um die Ventilanordnung 10 zu schalten. Die explodierte Darstellung in Fig. 5 veranschaulicht, dass in der beispielhaften Ausführungsform der Betätiger 86 integral mit dem Ventilglied 70 gestaltet ist. Es ist jedoch auch vorstellbar, den Betätiger 86 und das Ventilglied 70 als grundsätzlich separate Bauteile zu gestalten, die entsprechend miteinander gekoppelt sind.

Der Betätiger 86 weist beispielhaft zwei Arme auf, die sich zwischen einem dem Ventilabschnitt 14 zugewandten Ende des Ankers 84 und dem Ring 74 erstrecken, in dem der Schließkörper 72 aufgenommen ist. Andere Gestaltungen sind denkbar.

Bei einer Hubbewegung des Ankers 84 in der Längsrichtung 62 wird folglich über den Betätiger 86 auch das Ventilglied 70 mit dem Schließkörper 72 bewegt. Auf diese Weise kann der Schließkörper 72 in einer ersten Stellung am Ventilsitz 64 zur Anlage kommen, um den Ventilsitz 64 zu sperren. Ferner kann der Schließkörper 72 in seiner zweiten Stellung am Ventilsitz 66 zur Anlage kommen, um den Ventilsitz 66 zu sperren.

Der Betätigungsabschnitt 16 weist jedoch neben dem ersten Elektromagneten 40 einen weiteren Elektromagneten 42 auf. Die beiden Elektromagneten 40, 42 sind entlang der Längsachse 60 hintereinander angeordnet. Eine Verbindung/Kopplung zwischen den beiden Elektromagneten 40, 42 ist über ein Verbindungsstück 88 gegeben, das beispielsweise als Stift 90 gestaltet ist. Auf diese Weise kann eine Bewegungskopplung, gegebenenfalls sogar eine Zwangskopplung, zwischen den beiden Elektromagneten 40, 42 realisiert werden. Das Verbindungsstück 88 ist an einer Stirnseite des Ankers 84, die von dem Ventilabschnitt 14 abgewandt ist, mit dem Anker 84 gekoppelt.

Der zweite Elektromagnet 42 weist einen Stopfen 100 an seiner vom Ventilabschnitt 14 abgewandten Seite auf. Der Stopfen 100 kann auch als feststehendes Ankerteil bezeichnet werden. An dem gegenüberliegenden Ende, das dem Ventilabschnitt 14 und dem ersten Elektromagneten 40 zugewandt ist, weist der zweite Elektromagnet 42 eine Flussscheibe 102 auf. In dem anhand der Fig. 3 und der Fig. 5 veranschaulichten Ausführungsbeispiel sind die Flussscheibe 102 des zweiten Elektromagneten 42 und die Hülse 80 des ersten Elektromagneten 40 integral und einstückig gestaltet. Durch die Hülse 80 und die Flussscheibe 102 erstreckt sich eine Ausnehmung, in der das Verbindungsstück 88 längsbeweglich angeordnet ist.

Der zweite Elektromagnet 42 weist ferner einen (beweglichen) Anker 104 auf. Der Anker 104 ist an seinem dem Ventilabschnitt 14 zugewandten Ende über das als Stift 90 gestaltete Verbindungsstück 88 mit dem Anker 84 zur Bewegungsmitnahme verbunden. Mit anderen Worten wirken die beiden Elektromagneten 40, 42 über die gekoppelte Bewegung der beiden Anker 84, 104 additiv auf den Schließkörper 72 bzw. das Ventilglied 70 ein.

Vorzugsweise bestehen die Anker 84, 104 und gegebenenfalls auch die Hülse 80, die Flussscheibe 82, der Stopfen 100 und die Flussscheibe 102 aus einem weichmagnetischen Material. Die Aufteilung des Magnetflusses in zwei Teilflüsse in den beiden Elektromagneten 40, 42 hat den Vorteil, dass eine vorschnelle Sättigung des magnetischen Materials zumindest der Anker 84, 104 und gegebenenfalls auch der Hülse 80, der Flussscheibe 82, des Stopfens 100 und der Flussscheibe 102 vermieden werden kann. Vorzugsweise besteht das Verbindungsstück 88 aus einem amagnetischen Material. Auf diese Weise kann sich eine magnetische Entkopplung zwischen der ersten Elektromagneten 40 und dem zweiten Elektromagneten 42 ergeben.

Der Anker 104 weist auf seinem Ende, das vom Ventilabschnitt 14 abgewandt ist, eine Ausnehmung auf, in der eine Rückstellfeder 106 aufgenommen ist, die sich zwischen dem Anker 104 und dem Stopfen 100 erstreckt. Bei der Rückstellfeder 106 handelt es sich in dem in Fig. 3 und Fig. 5 gezeigten Ausführungsbeispiel um eine Druckfeder. Die Rückstellfeder 106 drängt den Anker 104 und mittelbar über das Verbindungsstück 88 auch den Anker 84 in Richtung auf den Ventilabschnitt 14. Auf diese Weise wird der Schließkörper 82 in Richtung auf den Ventilsitz 66 vorgespannt. Wenn die beiden Elektromagneten 40, 42 nicht bestromt sind, sich also in einem unbestromten Zustand befinden, liegt der Schließkörper 82 dichtend auf dem Ventilsitz 66 auf.

Mit anderen Worten ist die Kraft in Längsrichtung 62, die die Rückstellfeder 106 aufbringt, größer als die entgegengerichtete Kraft, die das Vorspannelement 76 aufbringt. Das Vorspannelement 76 ist ebenso als Druckfeder gestaltet. Das Vorspannelement 76 erzeugt eine Kraft in Richtung auf den Betätigungsabschnitt 16. Auf diese Weise wird beispielsweise ein Lösen des Schließkörpers 72 vom Ventilsitz 66 unterstützt.

Im bestromten (aktiven) Zustand der beiden Elektromagneten 40, 42 werden die beiden Anker 84, 104 angezogen. Dies erzeugt eine Bewegung des Schließkörpers 72 weg vom Ventilsitz 66 hin auf eine dichtende Anlage am gegenüberliegenden Ventilsitz 64. Diese Bewegung erfolgt mit Unterstützung durch das Vorspannelement 76 und gegen die Kraft der Rückstellfeder 106.

Es versteht sich, dass auch andere Detailgestaltungen des Ventilabschnitts 14 vorstellbar sind. Wesentlich für den Gegenstand der vorliegenden Offenbarung ist, dass zwei Elektromagneten 40, 42 mechanisch derart miteinander gekoppelt sind, dass deren Anker 84, 104 additiv auf das Ventilglied 70 einwirken. Vorzugsweise ist die Bewegung der beiden Anker 84, 104 zwangsgekoppelt.

Die explodierte Darstellung in Fig. 5 veranschaulicht ferner eine beispielhafte Detailgestaltung des Ventilgehäuses 20. Das Ventilgehäuse 20 umfasst demgemäß in der gezeigten Ausführungsform ein Oberteil 120 und ein Unterteil 122, das auch als Einsatz bezeichnet werden kann. Das Oberteil 120 bildet unter anderem den Ventilsitz 64 aus. Das Unterteil 122 bildet unter anderem den Ventilsitz 66 aus. Im montierten Zustand des Ventilgehäuses 20 wird das Unterteil 122 am Oberteil 120 durch eine Halteplatte 124 gehalten und gesichert. Zur Abdichtung zwischen dem Oberteil 120 und dem Unterteil 122 sind ferner Dichtungen 126, 128 in Form von O-Ringen vorgesehen. Das Oberteil 120 und das Unterteil 122 bilden gemeinsam die Ventilkammer 28 aus.

Fig. 5 veranschaulicht ferner, dass zumindest die Spulen 56, 58 der beiden Elektromagneten 40, 42 gleichartig oder sogar identisch gestaltet sein können. Die Spule 56 umfasst einen Spulenkörper 138, der eine Wicklung 140 trägt. Die Spule 58 umfasst einen Spulenkörper 144, der eine Wicklung 146 trägt.

Ergänzend veranschaulicht Fig. 5, dass zur Abdichtung zwischen Komponenten der Ventilanordnung 10 diverse Dichtungen 160, 162, 164, 166, 168 vorgesehen sind, die als beispielhaft als O-Ringe gestaltet sind.

Der explodierten Darstellung in Fig. 5 ist ferner entnehmbar, dass der Betätiger 86 und das Ventilglied 70 beispielhaft integral gestaltet sind. Der Betätiger 86 umfasst 2 Arme, die sich im gefügten Zustand zwischen dem Anker 84 und einem Ring 74 erstrecken, der zur Aufnahme des Schließkörpers 72 dient. Das Vorspannelement 76 drängt den Schließkörper 72 in seinen Sitz am Ring 74 des Ventilglieds 70. Es ist auch vorstellbar, zwischen dem Betätiger 86 und dem eigentlichen Ventilglied 70, das den Schließkörper 72 trägt oder ausbildet, separate Koppelelemente vorzusehen, etwa zur Umlenkung von Kräften und Bewegungen.

Es versteht sich gleichwohl, dass das Ventilgehäuse 20 und auch weitere Komponenten der Ventilanordnung 10 auch anderweitig gestaltet und gefügt sein können.

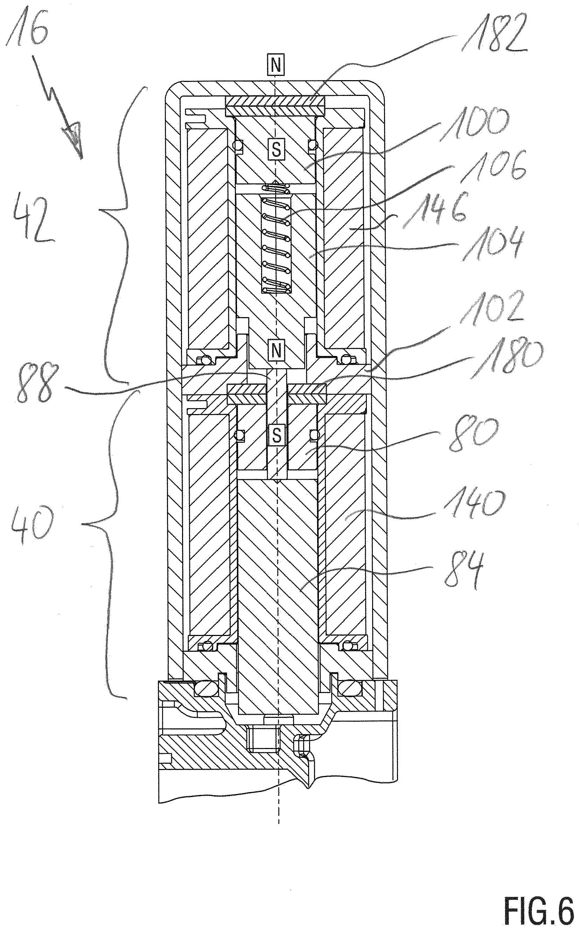

Ergänzend veranschaulicht Fig. 6 anhand einer geschnittenen Teilansicht eine abgewandelte Ausführungsform einer Ventilanordnung, die auf der anhand der Figuren 1 bis 5 veranschaulichten Ausführungsform beruht. Die Schnittebene und Ansichtsorientierung der Darstellung in Fig. 6 entspricht der Schnittebene und Ansichtsorientierung der Darstellung in Fig. 3, wobei in Fig. 6 auf eine Darstellung des Ventilabschnitts 14 verzichtet wurde. Fig. 6 bezieht sich primär auf den Betätigungsabschnitt 16. Zur Vermeidung von Wiederholungen wird nachfolgend vorrangig auf abweichende Merkmale von der in den Figuren 1 bis 5 gezeigten Ausführungsform eingegangen. Der übrige Aufbau kann den Figuren 1 bis 5 entnommen werden.

In dem Ausführungsbeispiel gemäß Fig. 6 ist dem ersten Elektromagneten 40 bzw. dem ersten Anker 84 ein erster Permanentmagnet 180 und dem zweiten Elektromagneten 42 bzw. dem zweiten Anker 104 ein zweiter Permanentmagnet 182 zugeordnet. Die Permanentmagneten 180, 182 können auch als Dauermagneten bezeichnet werden. In Fig. 6 ist anhand der Buchstaben N (Nordpol) und S (Südpol) eine beispielhafte Polorientierung der Permanentmagneten 180, 182 veranschaulicht.

Unter Verwendung der Permanentmagneten 180, 182 kann der Betätigungsabschnitt 16 mit den beiden Elektromagneten 40, 42 bistabil betrieben werden. Mit anderen Worten können die Anker 84, 104 zumindest in beispielhaften Ausführungsformen ohne Zufuhr (elektrischer) Energie in die Elektromagneten 40, 42 sowohl in der angezogenen Stellung als auch in der abgehobenen Stellung verharren. Es ist nur dann eine Energiezufuhr erforderlich, wenn die Anker 84, 104 zwischen den beiden Stellungen umgeschaltet werden sollen. Der Energieverbrauch kann deutlich gesenkt werden, insbesondere in einem Haltemodus der Anker 84, 104. Eine solche Funktionalität kann auch als Impulssteuerung bezeichnet werden.

Die Permanentmagneten 180, 182 sind so ausgelegt, dass die durch die Rückstellfeder 106 aufgebrachte Kraft überwunden werden kann. Wenn das Magnetfeld der Elektromagneten 40, 42 gleichsinnig gepolt ist wie das Magnetfeld der Permanentmagneten 180, 182, kann sich eine Erhöhung der Anzugskraft ergeben. Beispielhaft kann bei geeigneter Auslegung eine Verdopplung der Anzugskraft erreicht werden.

Wenn die Ventilanordnung 10 geschaltet hat, also die Anker 84, 104 der beiden Elektromagneten 40, 42 angezogen wurden, so kann der Erregerstrom in die Wicklungen 140, 146 der Spulen 56, 58 unterbrochen werden. Aufgrund des kleinen Luftspalts in diesem Zustand stellen die Permanentmagneten 180, 182 genügend hohe Kräfte bereit, um die Anker 84, 104 gegen die Kraft der Rückstellfeder 106 zu halten.

Um die Ventilanordnung 10 aus diesem Zustand umzuschalten, werden die Spulen 56, 58 derart bestromt, dass sich bei den Elektromagneten 40, 42 ein Magnetfeld ergibt, das gegensinnig zum Magnetfeld der Permanentmagneten 180, 182 ist. Mit anderen Worten heben sich die Magnetfelder der Permanentmagneten 180, 182 und der Elektromagneten 40, 42 teilweise auf. Sodann kommt die Rückstellfeder 106 zum Tragen. Die durch die Rückstellfelder 106 aufgebrachte Kraft drückt die Anker 84, 104 aus ihrer angezogenen Stellung heraus.

Es versteht sich, dass auch Gestaltungen mit lediglich einem Permanentmagneten vorstellbar sind, der dem ersten Elektromagneten 40 (bzw. dem ersten Anker 84) oder dem zweiten Elektromagneten 42 (bzw. dem zweiten Anker 104) zugeordnet ist. Auch auf diese Weise lässt sich eine Impulssteuerung mit bistabilen Endlagen der Anker 84, 104 bewirken.

## Patentansprüche

1. Als 3/2-Wegeventil gestaltete Vorrichtung zur Durchflussregelung eines Fluides, mit
- einem Ventilgehäuse (20) mit drei Ventilanschlüssen (22, 24, 26),
wobei im Ventilgehäuse (20) ein erster und ein zweiter Fluidpfad (30, 32) ausgebildet sind, die sich zwischen den drei Ventilanschlüssen (22, 24, 26) erstrecken,
- einem ersten Ventilsitz (64), der dem ersten Fluidpfad (30) zugeordnet ist,
- einem zweiten Ventilsitz (66), der dem zweiten Fluidpfad (32) zugeordnet ist,
- einem Schließkörper (72), der mit dem ersten und zweiten Ventilsitz (64, 66) koppelbar ist, um die zwei Fluidpfade (30, 32) zu sperren oder freizugeben, und
- einer elektromagnetischen Betätigungseinheit (16) zur Betätigung des Schließkörpers (72), die einen ersten Elektromagnet (40) und einen zweiten Elektromagnet (42) aufweist,
wobei der erste Elektromagnet (40) und der zweite Elektromagnet (42) in einer Längsrichtung (62) hintereinander angeordnet sind,
wobei der erste Elektromagnet (40) einen ersten beweglichen Anker (84) und der zweite Elektromagnet (42) einen zweiten beweglichen Anker (104) aufweist, die zur Erzeugung eines Ankerhubs in der Längsrichtung (62) beweglich sind,
wobei der erste Anker (84) und der zweite Anker (104) zur Bewegungsmitnahme mechanisch gekoppelt sind,
wobei der erste Anker (84) und der zweite Anker (104) zur Bewegungsmitnahme in der Längsrichtung (62) über ein Verbindungsstück (88) miteinander gekoppelt sind, das als Stift (90) gestaltet und zwischen dem ersten Anker (84) und dem zweiten Anker (104) angeordnet ist,
wobei das Verbindungsstück (88) aus einem nichtmagnetischen Werkstoff besteht, so dass eine magnetische Entkopplung zwischen dem ersten Elektromagneten (40) und dem zweiten Elektromagneten (42) gegeben ist,
wobei der erste Elektromagnet (40) und der zweite Elektromagnet (42) ein gemeinsames Magnetjoch (44) aufweisen,
wobei sich der erste Ventilsitz (64) und der zweite Ventilsitz (66) einander gegenüberliegen, und
wobei der Schließkörper (72) in einer ersten Schaltstellung am ersten Ventilsitz (64) zur Anlage kommt, um den ersten Ventilsitz (64) zu sperren, und in seiner zweiten Stellung am zweiten Ventilsitz (66) zur Anlage kommt, um den zweiten Ventilsitz (66) zu sperren.

2. Vorrichtung nach Anspruch 1, **dadurch gekennzeichnet, dass** der erste Elektromagnet (40) und der zweite Elektromagnet (42) konzentrisch zueinander ausgerichtet sind.

3. Vorrichtung nach Anspruch 1 oder 2, **dadurch gekennzeichnet, dass** der erste Elektromagnet (40) und der zweite Elektromagnet (42) in zumindest einem Betriebsmodus derart bestrombar sind, dass sich die Magnetkräfte des ersten Ankers (84) und des zweiten Ankers (104) addieren.

4. Vorrichtung nach einem der Ansprüche 1 bis 3, **dadurch gekennzeichnet, dass** der erste Anker (84) mit einem Betätiger (86) für den zumindest einen Schließkörper (72) gekoppelt ist.

5. Vorrichtung nach einem der Ansprüche 1 bis 4, **dadurch gekennzeichnet, dass** der erste Elektromagnet (40) und der zweite Elektromagnet (42) konstruktiv den gleichen Luftspalt haben, und dass der Ankerhub des ersten Ankers (84) und des zweiten Ankers (104) zwangsgekoppelt ist.

6. Vorrichtung nach einem der Ansprüche 1 bis 5, **dadurch gekennzeichnet, dass** Ankerteile des ersten Elektromagneten (40) und des zweiten Elektromagneten (42) zumindest im Wesentlichen aus weichmagnetischem Material bestehen.

7. Vorrichtung nach einem der Ansprüche 1 bis 6, **dadurch gekennzeichnet, dass** zumindest ein Permanentmagnet (180, 182) dem ersten Elektromagnet (40) und/o-der dem zweiten Elektromagnet (42) zugeordnet ist, um ein bistabiles Verhalten zu erzeugen.

8. Vorrichtung nach einem der Ansprüche 1 bis 7, **dadurch gekennzeichnet, dass** ein gemeinsames Gehäuse (18) für den ersten Elektromagnet (40) und den zweiten Elektromagnet (42) vorgesehen ist.

9. Vorrichtung nach einem der Ansprüche 1 bis 8, **dadurch gekennzeichnet, dass** in zumindest einem Betriebsmodus entweder der erste Elektromagnet (40) oder der zweite Elektromagnet (42) bestromt wird.

10. Vorrichtung nach einem der Ansprüche 1 bis 9, **dadurch gekennzeichnet, dass** der erste Elektromagnet (40) und der zweite Elektromagnet (42) gemeinsam parallel sowie seriell bestrombar sind, um zumindest eine erste Betriebsart und eine zweite Betriebsart bereitzustellen.

11. Vorrichtung nach Anspruch 10, **dadurch gekennzeichnet, dass** bei einer Betätigung des Schließkörpers (72) zunächst in der ersten Betriebsart eine parallele Bestromung erfolgt, und dass nach einer definierten Zeit in der zweiten Betriebsart eine serielle Bestromung erfolgt.

12. Ventilanordnung (10) mit einer Vorrichtung (12) zur Durchflussregelung nach einem der Ansprüche 1 bis 11.

## Claims

1. A device for controlling the flow of a fluid that is configured as a 3/2-way valve, comprising
- a valve body (20) with three valve ports (22, 24, 26),
wherein a first and a second fluid path (30, 32) are formed in the valve housing (20) that extend between the three valve ports (22, 24, 26),
- a first valve seat (64) that is associated with the first fluid path (30),
- a second valve seat (66) that is associated with the second fluid path (32),
- a closing body (72) that is arranged to be coupled to the first and second valve seat (64, 66) to block or unblock the two fluid paths (30, 32), and
- an electromagnetic actuation unit (16) for actuating the closing body (72), comprising a first electromagnet (40) and a second electromagnet (42),
wherein the first electromagnet (40) and the second electromagnet (42) are arranged one behind the other in a longitudinal direction (62),
wherein the first electromagnet (40) comprises a first movable armature (84) and the second electromagnet (42) comprises a second movable armature (104) that are movable in the longitudinal direction (62) to produce an armature stroke,
wherein the first armature (84) and the second armature (104) are mechanically coupled for motion entrainment,
wherein the first armature (84) and the second armature (104) are coupled with one another for motion entrainment in the longitudinal direction (62) via a connecting piece (88) that is configured as a pin (90) and disposed between the first armature (84) and the second armature (104),
wherein the connecting piece (88) is made of a non-magnetic material so that magnetic decoupling is provided between the first electromagnet (40) and the second electromagnet (42),
wherein the first electromagnet (40) and the second electromagnet (42) have a common magnet yoke (44),
wherein the first valve seat (64) and the second valve seat (66) face each other, and
wherein the closing body (72) comes into contact with the first valve seat (64) in a first switching position to block the first valve seat (64), and comes into contact with the second valve seat (66) in its second position to block the second valve seat (66).

2. Device according to claim 1, **characterized in that** the first electromagnet (40) and the second electromagnet (42) are aligned concentrically to each other.

3. Device according to claim 1 or 2, **characterized in that** the first electromagnet (40) and the second electromagnet (42) are arranged to be energized in at least one operating mode in such a way that the magnetic forces of the first armature (84) and the second armature (104) add up.

4. Device of any one of claims 1 to 3, **characterized in that** the first armature (84) is coupled to an actuator (86) for the at least one closing body (72).

5. Device according to any one of claims 1 to 4, **characterized in that** the first electromagnet (40) and the second electromagnet (42) structurally have the same air gap, and **in that** the armature stroke of the first armature (84) and the second armature (104) is positively coupled.

6. Device according to any one of claims 1 to 5, **characterized in that** armature parts of the first electromagnet (40) and the second electromagnet (42) consist at least substantially of soft magnetic material.

7. Device according to any one of claims 1 to 6, **characterized in that** at least one permanent magnet (180, 182) is associated with the first electromagnet (40) and/or the second electromagnet (42) to produce a bistable behavior.

8. Device according to any one of claims 1 to 7, **characterized in that** a common housing (18) is provided for the first electromagnet (40) and the second electromagnet (42).

9. Device according to any one of claims 1 to 8, **characterized in that** in at least one operating mode either the first electromagnet (40) or the second electromagnet (42) is energized.

10. Device according to any one of claims 1 to 9, **characterized in that** the first electromagnet (40) and the second electromagnet (42) are arranged to be jointly energized in parallel as well as in series to provide at least a first mode of operation and a second mode of operation.

11. Device according to claim 10, **characterized in that**, when the closing body (72) is actuated, initially parallel energization in the first operating mode is applied, and **in that** after a defined time serial energization in the second operating mode is applied.

12. A valve assembly (10) comprising a device (12) for flow control according to any one of claims 1 to 11.

## Revendications

1. Dispositif destiné à la régulation de débit d'un fluide, configuré sous forme de vanne 3/2 voies, comprenant
- un corps de vanne (20) muni de trois raccords de vanne (22, 24, 26),
dans lequel dans le corps de vanne (20), un premier et un deuxième chemin de fluide (30, 32) sont réalisés qui s'étendent entre les trois raccords de vanne (22, 24, 26),
- un premier siège de vanne (64) qui est associé au premier chemin de fluide (30),
- un deuxième siège de vanne (66) qui est associé au deuxième chemin de fluide (32),
- un obturateur (72) qui peut être couplé au premier et au deuxième siège de vanne (64, 66) pour bloquer ou débloquer les deux chemins de fluide (30, 32), et
- une unité d'actionnement électromagnétique (16) pour actionner l'obturateur (72) qui présente un premier électroaimant (40) et un deuxième électroaimant (42), dans lequel le premier électroaimant (40) et le deuxième électroaimant (42) sont disposés l'un après l'autre dans une direction longitudinale (62),
dans lequel le premier électroaimant (40) présente une première armature mobile (84) et le deuxième électroaimant (42) présente une deuxième armature mobile (104) qui sont mobiles dans la direction longitudinale (62) pour générer un trajet d'armature,
dans lequel la première armature (84) et la deuxième armature (104) sont couplées mécaniquement en vue d'un entraînement de mouvement,
dans lequel la première armature (84) et la deuxième armature (104) sont couplées l'une à l'autre en vue d'un entraînement de mouvement dans la direction longitudinale (62) par l'intermédiaire d'une pièce de raccordement (88) qui est configurée sous forme de broche (90) et est disposée entre la première armature (84) et la deuxième armature (104),
dans lequel la pièce de raccordement (88) est composée d'un matériau non magnétique de sorte qu'un découplage magnétique existe entre le premier électroaimant (40) et le deuxième électroaimant (42),
dans lequel le premier électroaimant (40) et le deuxième électroaimant (42) présentent une culasse magnétique commune (44),
dans lequel le premier siège de vanne (64) et le deuxième siège de vanne (66) se font face, et
dans lequel, dans une première position de commutation, l'obturateur (72) vient en butée contre le premier siège de vanne (64) afin de bloquer le premier siège de vanne (64), et dans sa deuxième position, vient en butée contre le deuxième siège de vanne (66) afin de bloquer le deuxième siège de vanne (66).

2. Dispositif selon la revendication 1, **caractérisé en ce que** le premier électroaimant (40) et le deuxième électroaimant (42) sont alignés de manière concentrique l'un par rapport à l'autre.

3. Dispositif selon la revendication 1 ou 2, **caractérisé en ce que** le premier électroaimant (40) et le deuxième électroaimant (42) peuvent être alimentés en courant dans au moins un mode de fonctionnement de telle sorte que les forces magnétiques de la première armature (84) et de la deuxième armature (104) s'additionnent.

4. Dispositif selon l'une quelconque des revendications 1 à 3, **caractérisé en ce que** la première armature (84) est couplée à un actionneur (86) pour ledit au moins un obturateur (72).

5. Dispositif selon l'une quelconque des revendications 1 à 4, **caractérisé en ce que** le premier électroaimant (40) et le deuxième électroaimant (42) ont par construction le même entrefer, et **en ce que** le trajet d'armature de la première armature (84) et de la deuxième armature (104) sont couplés en force.

6. Dispositif selon l'une quelconque des revendications 1 à 5, **caractérisé en ce que** des parties d'armature du premier électroaimant (40) et du deuxième électroaimant (42) sont composées au moins substantiellement d'un matériau magnétique doux.

7. Dispositif selon l'une quelconque des revendications 1 à 6, **caractérisé en ce qu'**au moins un aimant permanent (180, 182) est associé au premier électroaimant (40) et/ou au deuxième électroaimant (42) pour générer un comportement bistable.

8. Dispositif selon l'une quelconque des revendications 1 à 7, **caractérisé en ce qu'**un boîtier commun (18) est prévu pour le premier électroaimant (40) et le deuxième électroaimant (42).

9. Dispositif selon l'une quelconque des revendications 1 à 8, **caractérisé en ce que** dans au moins un mode de fonctionnement, soit le premier électroaimant (40), soit le deuxième électroaimant (42) est alimenté en courant.

10. Dispositif selon l'une quelconque des revendications 1 à 9, **caractérisé en ce que** le premier électroaimant (40) et le deuxième électroaimant (42) peuvent être alimentés en courant en commun, en parallèle et en série, afin de fournir au moins un premier mode de fonctionnement et un deuxième mode de fonctionnement.

11. Dispositif selon la revendication 10, **caractérisé en ce que** lors d'un actionnement de l'obturateur (72), d'abord une alimentation en courant parallèle est effectuée dans le premier mode de fonctionnement, et **en ce qu'**après un délai défini, une alimentation en courant série est effectuée dans le deuxième mode de fonctionnement.

12. Agencement de vanne (10) comprenant un dispositif (12) de régulation de débit selon l'une quelconque des revendications 1 à 11.
